# EUROPÄISCHE PATENTANMELDUNG

(11) **EP 3 470 257 A1**
(43) Veröffentlichungstag der Anmeldung: **17.04.2019**
(21) Anmeldenummer: 18195110.4
(22) Anmeldetag: 18.09.2018
(51) Int. Cl.: B60L 50/60

(54) **LASTKRAFTWAGEN, LADEANORDNUNG UND VERFAHREN ZUM ELEKTRISCHEN LADEN**

(30) Priorität: 12.10.2017 EP 17196128
(71) Anmelder: MAGNA STEYR Fahrzeugtechnik AG & Co KG, 8041 Graz (AT)
(72) Erfinder: SCHRUTH, Rainer, 8042 Graz (AT)
(74) Vertreter: Zangger, Bernd

(57) **Zusammenfassung**

Ein Lastkraftwagen (1), umfassend ein durch einen Elektromotor antreibbares und eine Fahrerkabine aufweisendes Fahrzeug (2) und einen in Fahrtrichtung hinter dem Fahrzeug (2) mit dem Fahrzeug (2) verbundenen Aufbau oder Anhänger (3) zum Gütertransport, wobei am Fahrzeug (2) ein Energiespeicher (4) für den antreibenden Elektromotor angeordnet ist, wobei zumindest ein Ladekontakt (5) zum elektrischen Laden des Energiespeichers (4) am Aufbau oder Anhänger (3) angeordnet ist, sowie eine Ladeanordnung umfassend einen solchen Lastkraftwagen (1) und eine Laderampe zum Beladen und/oder Entladen von Gütern, sowie ein Verfahren zum elektrischen Laden eines solchen Lastkraftwagens.

## Beschreibung

### Gebiet der Erfindung

Die vorliegende Erfindung betrifft einen Lastkraftwagen, umfassend ein eine Fahrerkabine aufweisendes, angetriebenes Fahrzeug mit einem elektrischen Energiespeicher und einen mit dem Fahrzeug verbundenen Aufbau oder Anhänger zum Gütertransport. Die Erfindung betrifft ferner eine Ladeanordnung umfassend einen solchen Lastkraftwagen und eine Laderampe zum Beladen und/oder Entladen von Gütern des Lastkraftwagens und ein Verfahren zum elektrischen Laden des Lastkraftwagens.

### Stand der Technik

Lastkraftwagen zum Transport von Gütern sind hinlänglich bekannt und können insbesondere direkt mit dem angetriebenen Teil des Lastkraftwagens, hier als "Fahrzeug" bezeichnet, fest verbundene Aufbauten als Container für den Gütertransport und/oder auch abhängbare Anhänger als Container für den Gütertransport aufweisen. Beispielsweise kann ein solcher Aufbau durch einen Pritschenaufbau oder Kofferaufbau gebildet werden. Ein Anhänger kann beispielsweise aufgelegt sein und mit einer Zugmaschine als Fahrzeug gemeinsam einen Sattelzug als Lastkraftwagen bilden.

Für derartige Lastkraftwagen bzw. Fahrzeuge von Lastkraftwagen ist inzwischen bekannt, dass als Antrieb zumindest ein Elektromotor eingesetzt werden kann, die Lastkraftwagen also insbesondere als Elektro- oder Hybridfahrzeuge ausgebildet sind.

Der Energiespeicher für den Elektromotor ist dabei im Fahrzeug, meist unter der Fahrkabine, angeordnet. Auch ein Kontakt, beispielsweise eine Buchse, zum Aufladen des Energiespeichers ist üblicherweise im Fahrzeug, in der Nähe des Energiespeichers und in der Nähe der Fahrerkabine angeordnet.

Das elektrische Laden wird üblicherweise über ein Ladekabel realisiert, das mit dem Ladekontakt am Fahrzeug verbunden wird. Alternativen, beispielsweise über induktives Laden, benötigen eine aufwändige Infrastruktur und sind üblicherweise weniger effizient, fehleranfällig oder teuer.

Insbesondere Lastkraftwagen mit Energiespeichern die für den Antrieb erforderlich sind haben den Nachteil, dass sie auf Grund der notwendigen elektrischen Ladevorgänge unerwünscht lange Standzeiten haben, was die Wirtschaftlichkeit solcher Lastkraftwagen in Frage stellen.

### Zusammenfassung der Erfindung

Es ist eine Aufgabe der Erfindung, Lastkraftwagen der genannten Art in dieser Hinsicht zu verbessern und insbesondere Lastkraftwagen mit elektrischen Energiespeichern anzugeben, die geringere Standzeiten für elektrisches Laden erfordern.

Eine weitere Aufgabe der Erfindung ist es, eine Ladeanordnung umfassend einen solchen Lastkraftwagen und eine Laderampe zum Beladen und/oder Entladen von Gütern des Lastkraftwagens anzugeben, die ein effizientes Aufladen des Energiespeichers des Lastkraftwagens ermöglicht.

Eine weitere Aufgabe der Erfindung ist es, ein effizientes Verfahren zum elektrischen Laden des Lastkraftwagens anzugeben.

Die Lösung der Aufgabe erfolgt durch einen Lastkraftwagen, umfassend ein eine Fahrerkabine aufweisendes, angetriebenes Fahrzeug und einen in Fahrtrichtung hinter dem Fahrzeug mit dem Fahrzeug verbundenen Aufbau oder Anhänger zum Gütertransport, wobei am Fahrzeug ein elektrischer Energiespeicher angeordnet ist, wobei zumindest ein Ladekontakt zum elektrischen Laden des Energiespeichers am Aufbau oder Anhänger angeordnet ist.

Erfindungsgemäß ist ein Ladekontakt für den Energiespeicher des Fahrzeugs nicht im oder am Fahrzeug ausgebildet, sondern an dem Teil des Lastkraftwagens, der eigentlich nur dem Gütertransport dient, nämlich am Aufbau oder besonders bevorzugt am Anhänger des Lastkraftwagens.

Ein "Ladekontakt" kann hierbei mehrere elektrische Kontakte umfassen, in der Regel umfasst ein Ladekontakt zwei elektrische Pole.

Durch diese Position des elektrischen Kontaktes ist es wesentlich einfacher ein elektrisches Aufladen während einer Beladung oder Entladung des Lastkraftwagens an einer Beladestation, Laderampe oder ähnlichem durchzuführen, da üblicherweise der zum Gütertransport bestimmte Teil des Lastkraftwagens näher an der Beladestation, Laderampe etc liegt, als das angetriebene Fahrzeug und der Energiespeicher des Fahrzeuges.

Durch einen elektrischen Ladekontakt hinten - am Aufbau oder Anhänger - kann ein elektrischer Ladevorgang im Zuge des Be- und Entladens mit Waren vereinfacht und insbesondere auch automatisiert werden, wodurch ein elektrisches Laden gefördert wird, das zu keinen Standzeiten führt, die nicht aufgrund der Warenbeladung und -entladung ohnehin nötig sind. Dass hierfür üblicherweise weit längere elektrische Anschlusskabel zum Energiespeicher benötigt werden, wird für den erfindungsgemäßen Vorteil in Kauf genommen.

Der Energiespeicher dient bevorzugt dem Antrieb des Fahrzeuges. Der Energiespeicher ist daher üblicherweise eine Hochvoltbatterie oder Antriebsbatterie oder Traktionsbatterie.

Das Fahrzeug weist daher vorzugsweise einen Elektromotor auf, der vom Energiespeicher gespeist wird. Der Elektromotor dient dem Antrieb des Fahrzeuges. Das Fahrzeug kann daher ein Elektrofahrzeug oder ein Hybridfahrzeug sein.

Der Ladekontakt ist bevorzugt am in Fahrtrichtung hinteren Ende des Aufbaus oder Anhängers angeordnet. Dieses hintere Ende des Aufbaus oder Anhängers ist einer Beladestation am nächsten und kann daher auf einfachste Weise mit einer elektrischen Lade-Vorrichtung an der Beladestation elektrisch verbunden werden. Insbesondere kann in dieser Position des Kontakts auch am einfachsten ein automatisches Andocken an eine Ladevorrichtung bei einer Rückwärts-Anfahrt des Lastkraftwagens erreicht werden.

Bevorzugt ist der Ladekontakt auf einer Höhe unterhalb einer Ladefläche des Aufbaus oder Anhängers angeordnet. Hierdurch wird ein einfacher Anschluss ermöglicht und angeschlossene Ladekabel behindern weniger die Warenbeladung und -entladung des Lastkraftwagens.

Vorzugsweise ist eine elektrische Leitung vom Ladekontakt am Aufbau oder Anhänger bis zum Energiespeicher im Fahrzeug geführt.

Die elektrische Leitung umfasst bevorzugt eine Steckverbindung zwischen Aufbau oder Anhänger einerseits und Fahrzeug andererseits. Hierdurch können Aufbau bzw. Anhänger vom Fahrzeug elektrisch getrennt werden.

Die elektrische Leitung ist bevorzugt vom Ladekontakt über die ganze Länge des Aufbaus oder Anhängers bis zum vorderen Ende des Aufbaus oder Anhängers geführt.

Zusätzlich zur elektrischen Leitung kann eine Kommunikationsleitung vom Ladekontakt bis zum Fahrzeug geführt sein, wobei bevorzugt die Kommunikationsleitung eine Steckverbindung zwischen Aufbau oder Anhänger einerseits und Fahrzeug andererseits umfasst. Eine solche Kommunikationsverbindung kann beispielsweise einen Status Anschluss/Nicht-Anschluss einer Spannungsquelle am Ladekontakt oder weitere Informationen über die Spannungsquelle in ein Steuergerät des Fahrzeugs und/oder in eine Anzeige in der Fahrerkabine übertragen.

Eine erfindungsgemäße Ladeanordnung umfasst einen Lastkraftwagen wie zuvor beschrieben und eine Laderampe zum Beladen und/oder Entladen von Gütern am hinteren Ende eines Aufbaus oder Anhängers des Lastkraftwagens, wobei an der Laderampe ein Ladegegenkontakt ausgebildet ist, der dazu ausgebildet ist, mit dem Ladekontakt des Lastkraftwagens in elektrisch leitenden Kontakt zu gelangen, insbesondere selbsttätig in Kontakt zu gelangen während einer Rückwärts-Annäherung des Aufbaus oder Anhängers an die Laderampe.

"Laderampe" ist dabei nicht nur im engen Sinn der Rampe selbst, sondern in einem weiteren Sinn als Ladebereich zum Be- und Entladen von Waren, der eine Rampe umfasst, zu verstehen. Der Ladegegenkontakt muss dazu nicht direkt an einer Rampenfläche der Laderampe angeordnet sein, sondern kann beliebig im Bereich der Laderampe, bevorzugt jedoch an einem Ende der Laderampe das einem andockenden Lastkraftwagen zugewandt ist, angeordnet sein. Durch ihren Ladegegenkontakt und eine damit verbundene Spannungsquelle wird die "Laderampe", die zunächst zum Be- und Entladen von Waren ausgebildet ist, auch zu einer elektrischen "Lade"-station.

Der Ladegegenkontakt und/oder der Ladekontakt kann flexibel, insbesondere elastisch, ausgebildet sein, um eine selbsttätige Verbindung zwischen Ladekontakt und Ladegegenkontakt zu erleichtern.

Ein erfindungsgemäßes Verfahren zum elektrischen Laden eines solchen Lastkraftwagens umfasst die Schritte, dass der Lastkraftwagen zum Beladen oder Entladen von Gütern rückwärts an eine Laderampe gefahren wird, insbesondere an eine Laderampe wie zuvor beschrieben, wobei durch das Rückwärtsfahren an die Laderampe der Ladekontakt des Aufbaus oder Anhängers in Kontakt mit einem Gegenkontakt an der Laderampe gebracht wird, wobei der Energiespeicher des Fahrzeugs während einer Beladung oder Entladung von Gütern aus dem Aufbau oder Anhänger über den Ladekontakt und den Ladegegenkontakt von der Laderampe elektrisch aufgeladen wird.

### Kurzbeschreibung der Zeichnungen

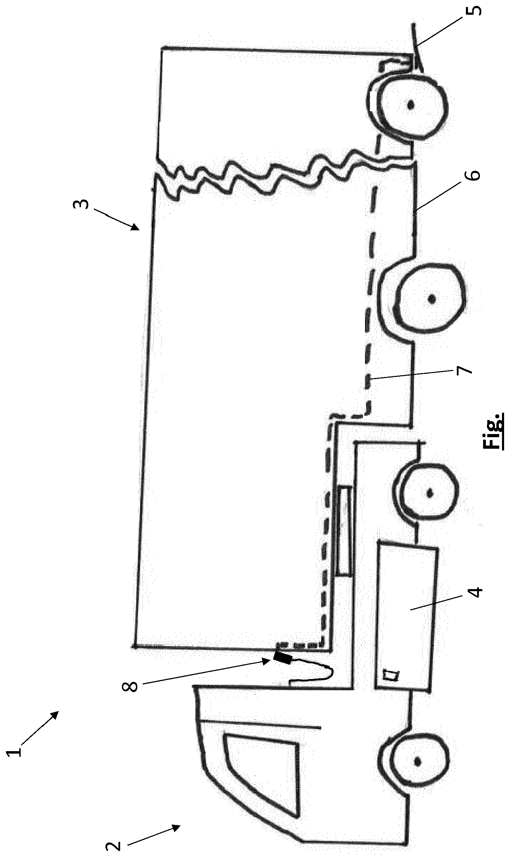

Die Erfindung wird im Folgenden beispielhaft unter Bezugnahme auf die Zeichnung beschrieben.
- Fig.: ist eine schematische Darstellung eines erfindungsgemäßen Lastkraftwagens.

### Detaillierte Beschreibung der Erfindung

In Fig. ist ein erfindungsgemäßer Lastkraftwagen 1 dargestellt, welcher ein Fahrzeug 2 als Zugmaschine umfasst, die durch einen Elektromotor den Lastkraftwagen 1 antreibt und eine Fahrerkabine aufweist. Am Fahrzeug 2 ist ein Energiespeicher 4 für den antreibenden Elektromotor angeordnet.

In üblicher Fahrtrichtung, also bei Vorwärtsfahrt, ist hinter dem Fahrzeug 2 ein mit dem Fahrzeug 2 verbundener Anhänger 3 zum Gütertransport vorgesehen.

Am hinteren Ende des Anhängers 3 ist, unterhalb einer Ladefläche 6 des Anhängers 3, ein Ladekontakt 5 zum elektrischen Laden des Energiespeichers 4 ausgebildet.

Eine elektrische Leitung 7 ist vom Ladekontakt 5 bis zum Energiespeicher 4 im Fahrzeug 2 geführt, verbindet also den Ladekontakt 5 mit dem Energiespeicher 4, so dass dieser elektrisch geladen werden kann.

Die elektrische Leitung 7 ist mehrteilig ausgeführt und zwischen Anhänger 3 und Fahrzeug 2 mittels einer Steckverbindung 8 unterbrochen bzw. elektrisch leitend verbunden.

Die elektrische Leitung 7 erstreckt sich vom Ladekontakt 5 über die ganze Länge des Anhängers 3 bis zum vorderen Ende des Anhängers 3.
Es erfolgt eine Weiterleitung der Spannungsversorgung über den Aufbau oder Anhänger 3 in das Fahrzeug 2 bzw. den Energiespeicher 4 des Lastkraftwagens, insbesondere des E-LKWs.

Zusätzlich zur elektrischen Leitung 7 ist eine nicht dargestellte Kommunikationsleitung vom Ladekontakt 5 bis zum Fahrzeug 2 geführt, die wiederum mittels einer Steckverbindung, insbesondere im Bereich der stromladenden Steckverbindung 7, zwischen Anhänger 3 und Fahrzeug 2 verbindet.

Ein solcher Lastkraftwagen 1 kann über eine Laderampe zum Beladen und/oder Entladen von Gütern die einen Ladegegenkontakt zur Verbindung mit dem Ladekontakt 5 des Lastkraftwagens 1 aufweist elektrisch geladen werden.

Die Verbindung zwischen Ladegegenkontakt und Ladekontakt 5 kann selbsttätig hergestellt werden, wenn der Lastkraftwagen sich rückwärtsfahrend der Laderampe und somit dem Ladegegenkontakt nähert.

Insbesondere automatisierte elektrische Ladevorgänge, während der Zeit in der der Lastkraftwagen ohnehin an der Laderampe angedockt ist, können Leerzeiten des Lastkraftwagens reduzieren.

Mit erfindungsgemäßen Lastkraftwagen wird somit bevorzugt auch ein 3-Schicht-Betrieb bzw. ein Dauerbetrieb des Fahrzeugs 2 möglich.

Beim rückwärtigen Rangieren des Lastkraftwagens zu einer Laderampe bzw. in ein Dock, fährt der Aufbau oder Anhänger 3 bündig an die Rampe zur Verladung der Fracht. Bei diesem Vorgang werden die an der Fahrzeugunterseite angebrachten Kontakte 5 mit den Kontakten der Laderampe verbunden. Beispielsweise geschieht dies über Einzelkontakte, die in einzelnen Schienen geführt werden können.

Durch diesen Vorgang wird der gesamte Lastkraftwagen während der Verbindung zu einer Art Ladesäule. Erst nach der Verriegelung der Steckverbindungen und der korrekten Verbindung aller Leitungen und Kommunikationskanäle wird die Leistung zum Laden des Energiespeichers 4 zugeschaltet.

Ein elektrisches Laden der Antriebsbatterie eines Elektro-LKW bzw. Elektro-LKW-Zugfahrzeuges, ohne dass der Fahrer dazu aussteigen muss oder ein Stromkabel von Hand an den LKW anstecken muss, wird ermöglicht.

Die Kontaktierung zum Laden des Energiespeichers 4 erfolgt erfindungsgemäß am Anhänger 3, insbesondere am Heck des Anhängers 3 bzw. Sattelzugauflegers, Trailer, bzw. Aufbaus.

Dazu fährt der LKW-Fahrer wie gewohnt mit dem Retourgang in das Frachtbelade-/-entladedock, also die Laderampe, an dem sich eine elektrische Ladestation bzw. dessen Ladekontakte, der Gegenladekontakt, befindet, wobei sich durch das rückwärtige Bewegen des LKW inkl. dessen Anhängers 3 bzw. Sattelauflegers die an der Hinterseite der Ladefläche und unter der Ladefläche - bevorzugt zwischen Hinterachse und Rücklichtern - befindlichen elektrischen Kontakte im Endbereich des LKW bei Annäherung an das elektrische Gegenstück im Dock automatisch bzw. von selbst elektrisch verbinden.

Hierbei wird also durch bündiges Hinfahren des Anhängers 3 bzw. Sattelauflegers an eine übliche Endstation - bündig im Dock - gleichzeitig elektrisch kontaktiert.

Die elektrischen Kontakte, also der Ladekontakt 5, sind hierbei am Lastkraftwagen beispielsweise länglich gestaltet, zum Beispiel als Messerkontakte, deren Längsseite in Fahrtrichtung zeigt, sodass durch die lineare Rückwärtsfahrbewegung ein sich gleitendes Aneinanderschmiegen der Kontakte - Ladekontakt 5- mit den Kontakten des stationären Gegenstückes - Gegenladekontakt - möglich ist.

Der Ladegegenkontakt der stationären Einrichtung und/oder der Ladekontakt 5 am Lastkraftwagen weist bevorzugt eine Nachgiebigkeit auf, um bei fehlerhaften Fahrmanövern die elektrischen Kontakte nicht zu beschädigen. Die Ladegegenkontakte der stationären Einrichtung, sowie auch die Ladekontakte 5 am Aufbau bzw. Anhänger 3 sind grundsätzlich fix montiert.

Bevorzugt gibt es insgesamt zwei Kontaktstellten, insbesondere Steckverbindungen, in der elektrischen Leitung 7 von der Spannungsquelle bis zum Energiespeicher 4 - einerseits die Kontaktstelle 8 zwischen Fahrzeug 2, insbesondere Zugfahrzeug, und Anhänger 3 bzw. Sattelzugaufleger und andererseits zwischen Anhänger 3 bzw. Sattelzugaufleger und stationärer Ladeeinrichtung.

Der Ladestrom zur Batterie, Energiespeicher 4, wird in dieser Lösung über den Anhänger 3 bzw. Sattelaufleger, Aufbau, geleitet. Erst nach verriegeln aller Steckverbindungen und der korrekten Verbindung aller Leitungen und Kommunikationskanäle wird die Leistung zur Ladung der Batterie zugeschaltet.

Der Lastkraftwagen kann von Hand gelenkt sein. Optional kann das Fahrzeug 2 und somit der Lastkraftwagen automatisch bzw. autonom fahren. Der Fahrzeug des Lastkraftwagens kann also ein autonom gesteuertes Fahrzeug sein.

### Bezugszeichenliste

- 1: Lastkraftwagen
- 2: Fahrzeug
- 3: Anhänger
- 4: Energiespeicher
- 5: Ladekontakt
- 6: Ladefläche
- 7: elektrische Leitung
- 8: Steckverbindung

## Patentansprüche

1. Lastkraftwagen (1), umfassend ein eine Fahrerkabine aufweisendes, angetriebenes Fahrzeug (2) und einen in Fahrtrichtung hinter dem Fahrzeug (2) mit dem Fahrzeug (2) verbundenen Aufbau oder Anhänger (3) zum Gütertransport, wobei am Fahrzeug (2) ein elektrischer Energiespeicher (4) angeordnet ist,
**dadurch gekennzeichnet, dass** zumindest ein Ladekontakt (5) zum elektrischen Laden des Energiespeichers (4) am Aufbau oder Anhänger (3) angeordnet ist.

2. Lastkraftwagen nach Anspruch 1,
**dadurch gekennzeichnet, dass** der Ladekontakt (5) am in Fahrtrichtung hinteren Ende des Aufbaus oder Anhängers (3) angeordnet ist.

3. Lastkraftwagen nach zumindest einem der vorhergehenden Ansprüche,
**dadurch gekennzeichnet, dass** der Ladekontakt (5) auf einer Höhe unterhalb einer Ladefläche (6) des Aufbaus oder Anhängers (3) angeordnet ist.

4. Lastkraftwagen nach zumindest einem der vorhergehenden Ansprüche,
**dadurch gekennzeichnet, dass** eine elektrische Leitung (7) vom Ladekontakt (5) am Aufbau oder Anhänger (3) bis zum Energiespeicher (4) im Fahrzeug geführt ist.

5. Lastkraftwagen nach Anspruch 4,
**dadurch gekennzeichnet, dass** die elektrische Leitung (7) eine Steckverbindung (8) zwischen Aufbau oder Anhänger (3) einerseits und Fahrzeug (2) andererseits umfasst.

6. Lastkraftwagen nach Anspruch 4 oder 5,
**dadurch gekennzeichnet, dass** die elektrische Leitung (7) vom Ladekontakt (5) über die ganze Länge des Aufbaus oder Anhängers (3) bis zum vorderen Ende des Aufbaus oder Anhängers (3) geführt ist.

7. Lastkraftwagen nach zumindest einem der vorhergehenden Ansprüche,
**dadurch gekennzeichnet, dass** eine Kommunikationsleitung vom Ladekontakt (5) bis zum Fahrzeug (2) geführt ist, wobei bevorzugt die Kommunikationsleitung eine Steckverbindung zwischen Aufbau oder Anhänger (3) einerseits und Fahrzeug (2) andererseits umfasst.

8. Ladeanordnung umfassend einen Lastkraftwagen (1) nach zumindest einem der vorhergehenden Ansprüche und eine Laderampe zum Beladen und/oder Entladen von Gütern am hinteren Ende eines Aufbaus oder Anhängers (3) des Lastkraftwagens (1),
**dadurch gekennzeichnet, dass** an der Laderampe ein Ladegegenkontakt ausgebildet ist, der dazu ausgebildet ist, mit dem Ladekontakt (5) des Lastkraftwagens (1) in Kontakt zu gelangen, insbesondere selbsttätig in Kontakt zu gelangen während einer Rückwärts-Annäherung des Aufbaus oder Anhängers (3) an die Laderampe.

9. Verfahren zum elektrischen Laden eines Lastkraftwagens (1) nach zumindest einem der vorhergehenden Ansprüche,
**dadurch gekennzeichnet, dass** der Lastkraftwagen (1) zum Beladen oder Entladen von Gütern rückwärts an eine Laderampe gefahren wird, wobei durch das Rückwärtsfahren an die Laderampe der Ladekontakt (5) des Aufbaus oder Anhängers (3) in elektrisch leitenden Kontakt mit einem Gegenkontakt an der Laderampe gebracht wird, wobei der Energiespeicher (4) des Fahrzeugs (2) während einer Beladung oder Entladung von Gütern aus dem Aufbau oder Anhänger (3) über den Ladekontakt (5) und den Ladegegenkontakt von der Laderampe elektrisch aufgeladen wird.
